# EUROPÄISCHE PATENTSCHRIFT

(11) **EP 3 347 295 B1**
(45) Veröffentlichungstag und Bekanntmachung des Hinweises auf die Patenterteilung: **07.10.2020**
(21) Anmeldenummer: 16753363.7
(22) Anmeldetag: 17.08.2016
(51) Int. Cl.: B66B 1/34, B66B 25/00, B66B 27/00

(54) **PERSONENTRANSPORTANLAGE MIT EINER EINRICHTUNG ZUR BETRIEBSZUSTANDSBESTIMMUNG**
PERSON TRANSPORT SYSTEM WITH A DEVICE FOR DETERMINING OPERATING STATE
INSTALLATION DE TRANSPORT DE PASSAGERS AYANT UN DISPOSITIF DESTINÉ A DETERMINER L'ÉTAT DE FONCTIONNEMENT

(30) Priorität: 10.09.2015 EP 15184737
(43) Veröffentlichungstag der Anmeldung: 18.07.2018
(73) Patentinhaber: Inventio AG, 6052 Hergiswil (CH)
(72) Erfinder: LUSTENBERGER, Ivo, 6018 Buttisholz (CH)
(86) Internationale Anmeldenummer: PCT/EP2016/069468
(87) Internationale Veröffentlichungsnummer: WO 2017/042006

(56) Entgegenhaltungen:
- DE-A1- 4 113 249
- JP-A- H10 129 946

## Beschreibung

Die Erfindung betrifft eine Personentransportanlage die als Aufzug, Fahrtreppe oder Fahrsteig ausgebildet ist, mit einer Einrichtung zur Betriebszustandsbestimmung, sowie ein Verfahren zur Betriebszustandsbestimmung, insbesondere zur Geschwindigkeitsmessung, das für eine als Aufzug, Fahrtreppe oder Fahrsteig ausgebildete Personentransportanlage dient.

In der EP 1 541 519 B1 wird eine Personentransporteinrichtung offenbart, welche einen Radarsensor aufweist, um herannahende Benutzer zu detektieren. Für den Transport einer Person wird hierbei die Geschwindigkeit von einem reduzierten Wert auf eine Normalgeschwindigkeit erhöht. Um den Antrieb richtig zu steuern, muss die Geschwindigkeit des Stufenbandes oder Palettenbandes erfasst werden können.

In der JPH10129946 wird eine Personentransportanlage und ein Verfahren nach dem Stand der Technik offenbart.

Zum Bestimmen der Geschwindigkeit ist es denkbar, dass Antriebsmotoren mit eingebauten Encodern verwendet werden. Solche Antriebsmotoren haben den Nachteil einer zusätzlichen Spezialisierung seiner Ausgestaltung aufgrund des zusätzlichen Encoders, was hohe Kosten zur Folge hat.

Eine Aufgabe der Erfindung ist es, eine Einrichtung vorzuschlagen, die eine Betriebszustandsbestimmung, insbesondere eine Geschwindigkeitsmessung bei einer als Aufzug, Fahrtreppe oder Fahrsteig ausgebildeten Personentransportanlage ermöglicht, die einen einfachen Aufbau aufweist und kostengünstig ist, sowie ein Verfahren zur Betriebszustandsbestimmung, insbesondere zur Geschwindigkeitsmessung, das für eine als Aufzug, Fahrtreppe oder Fahrsteig ausgebildete Personentransportanlage dient und das mit solch einer Einrichtung durchführbar ist. Speziell ist es eine Aufgabe der Erfindung, solch eine Einrichtung, solch eine Personentransportanlage und solch ein Verfahren anzugeben, die eine verbesserte Betriebszustandsbestimmung ermöglichen, wobei insbesondere eine richtungsabhängige Geschwindigkeitsmessung ermöglicht ist. Im Folgenden sind Lösungen und Vorschläge für eine Personentransportanlage mit einer entsprechenden Einrichtung und ein entsprechendes Verfahren vorgestellt, welche zumindest Teile einer der gestellten Aufgaben lösen. Im Weiteren sind vorteilhafte, ergänzende oder alternative Weiterbildungen und Ausgestaltungen angegeben.

Nachfolgend werden Weiterbildungen insbesondere an Hand einer bevorzugten Ausführungsform dargestellt, bei der die Hilfselemente als optische Hilfselemente ausgebildet sind. Es versteht sich aber, dass in entsprechender Weise auch Weiterbildungen bei Ausführungsformen möglich sind, bei denen die Hilfselemente auf andere Weise, beispielsweise als induktiv abtastbare Hilfselemente, ausgebildet sind. Entsprechendes gilt für die Erfassungseinrichtung und die Art der Erfassung der Hilfselemente.

Die Einrichtung zur Betriebszustandsbestimmung nutzt eine geeignete Anzahl an optischen Hilfselementen, die auf geeignete Weise an dem Schwungrad des Antriebsmotors, auf einem Rad des Antriebsstranges oder ähnlichem angebracht oder ausgestaltet werden können. Auf diese Weise können kostengünstige Antriebsmotoren zum Einsatz kommen, bei denen gegebenenfalls das Schwungrad geeignet modifiziert wird. Beispielsweise kann das Schwungrad des Antriebsmotors so ausgestaltet werden, dass die Anordnung aus den optischen Hilfselementen in Form von Löchern oder aufgesetzten Metallplatten an dem Schwungrad realisiert ist. Die Abtastung dieser Löcher oder anderer optischer Hilfselemente kann permanent über die optische Erfassungseinrichtung erfolgen, woraus Pulse generiert werden können. Aus diesem Pulsbild beziehungsweise Signalverlauf kann eine Geschwindigkeitsmessung erfolgen. Diese Geschwindigkeitsmessung erfolgt zudem drehrichtungsabhängig.

Hierfür umfasst die Einrichtung zur Betriebszustandsbestimmung eine Anordnung aus optischen Hilfselementen und zumindest eine optische Erfassungseinrichtung, wobei die Anordnung aus den optischen Hilfselementen entsprechend einer Bewegung zumindest eines Transportelements der Personentransportanlage um eine Drehachse rotiert. Die Anordnung aus den optischen Hilfselementen ist so ausgestaltet und die optische Erfassungseinrichtung den optischen Hilfselementen so zugeordnet, dass alle Hilfselemente von derselben Erfassungseinrichtung erfassbar und im gleichen Signalverlauf der Erfassungseinrichtung erkennbar sind. Von der optischen Erfassungseinrichtung ist erfassbar, ob sich an einer bestimmten Erfassungsstelle gerade ein optisches Hilfselement befindet oder nicht. Mindestens eines der optischen Hilfselemente ist entsprechend einer ersten Ausgestaltungsart und mindestens ein zweites optisches Hilfselement ist zumindest entsprechend einer zweiten Ausgestaltungsart ausgestaltet, wobei von der Erfassungseinrichtung zumindest bei einer Rotation der Anordnung aus den optischen Hilfselementen erfassbar ist, ob ein sich an einer bestimmten Erfassungsstelle befindendes optisches Hilfselement von der ersten Ausgestaltungsart oder der zweiten Ausgestaltungsart ist. Von der Erfassungseinrichtung sind bei der Rotation der Anordnung aus den optischen Hilfselementen zumindest ein Hilfselement der ersten Ausgestaltungsart und zumindest ein Hilfselement der zweiten Ausgestaltungsart so einander zuordenbar, dass aus der definierten Erfassung von Hilfselementen der ersten Ausgestaltungsart und der zweiten Ausgestaltungsart die Drehrichtung der Anordnung von Hilfselementen bestimmbar ist.

Der große Vorteil der vorliegenden Erfindung besteht darin, dass durch die unterschiedlichen Ausgestaltungsarten der Hilfselemente nur eine Erfassungseinrichtung notwendig ist und dass sowohl die Geschwindigkeit als auch die Drehrichtung aus demselben Signalverlauf ermittelt werden kann. Dies reduziert die Kosten betreffend die Einrichtung zur Betriebszustandsbestimmung und einer Auswerteeinrichtung, welche nur einen Signalverlauf und nicht gleichzeitig mehrere Signalverläufe der Einrichtung zur Betriebszustandsbestimmung verarbeiten muss.

Unter definierter Erfassung ist zu verstehen, dass die Auswerteeinrichtung aufgrund der Pulsweiten der Pulse, welche die Hilfselemente erzeugen, beispielsweise die Reihenfolge der Erfassung des optischen Hilfselements der ersten Ausgestaltungsart und des optischen Hilfselements der zweiten Ausgestaltungsart ermitteln kann. Hierbei können zum Beispiel auch vorangehend erfasste Pulsweiten und ermittelte Geschwindigkeitswerte und deren Änderungen herangezogen und extrapoliert werden, so dass diese errechneten, zu erwartenden Pulsweiten mit den gemessenen Pulsweiten verglichen werden können um das Resultat zu verifizieren.

Die Personentransportanlage, die als Aufzug, Fahrtreppe oder Fahrsteig ausgebildet ist, weist hierfür solch eine Einrichtung auf. Das Verfahren zur Betriebszustandsbestimmung, insbesondere zur Geschwindigkeitsmessung, das für eine als Aufzug, Fahrtreppe oder Fahrsteig ausgebildete Personentransportanlage dient und das mit solch einer genannten Einrichtung durchführbar ist, erfasst hierfür, ob sich an einer bestimmten Erfassungsstelle gerade ein optisches Hilfselement befindet oder nicht, erfasst ferner, ob ein sich gerade an der bestimmten Erfassungsstelle befindendes optisches Hilfselement von einer ersten Ausgestaltungsart oder von einer zweiten Ausgestaltungsart ist, ordnet bei einer Rotation der Anordnung aus den optischen Hilfselementen zumindest ein optisches Hilfselement der ersten Ausgestaltungsart und zumindest ein optisches Hilfselement der zweiten Ausgestaltungsart einander zu und bestimmt aus der Reihenfolge der Erfassung des optischen Hilfselements der ersten Ausgestaltungsart und des optischen Hilfselements der zweiten Ausgestaltungsart, die einander zugeordnet sind, die Drehrichtung der Anordnung.

Vorteilhaft ist es, dass die Anordnung aus den optischen Hilfselementen durch Anordnen der optischen Hilfselemente auf einem Schwungrad des Antriebsmotors oder auf einem von dem Antriebsmotor oder durch eine Bewegung des Transportelements angetriebenen Rades des Antriebsstranges gebildet ist. Somit kann das Schwungrad des Antriebsmotors, falls ein solches vorgesehen ist, oder ein sonstiges Rad des Antriebsstranges, das sich mit der Bewegung des Transportelements dreht und ohnehin vorgesehen ist, genutzt werden, um die drehbare Anordnung aus den optischen Hilfselementen zu realisieren. Dadurch stehen zahlreiche Möglichkeiten zur Verfügung, die einen breiten Anwendungsbereich ermöglichen und einen ohnehin vorhandenen, drehenden Bauteil der Fahrtreppe, des Fahrsteiges oder des Aufzugs zu verwenden. Die optischen Hilfselemente können hierbei in Bezug auf den jeweiligen Anwendungsfall auf geeignete Weise gewählt oder ausgestaltet werden.

Bei einer möglichen Ausgestaltung ist es vorteilhaft, dass die optischen Hilfselemente als lichtdurchlässige optische Hilfselemente und/oder als lichtreflektierende optische Hilfselemente ausgebildet sind. Bei einer Ausgestaltung als lichtdurchlässige optische Hilfselemente ist insbesondere eine Ausgestaltung in Form von Öffnungen, insbesondere Bohrungen oder Löchern, denkbar. Über die Größe der Öffnung können dann mehrere, insbesondere zwei, Ausgestaltungsarten realisiert werden. Ferner ist es möglich, unterschiedlich große lichtreflektierende optische Hilfselemente vorzusehen, um solch eine Unterscheidung zu ermöglichen. Ein lichtreflektierendes optisches Hilfselement kann hierbei durch eine entsprechende Oberflächenbearbeitung und gegebenenfalls Beschichtung des Schwungrads oder dergleichen erfolgen. Es ist allerdings auch eine Ausgestaltung denkbar, bei der solch ein lichtreflektierendes optisches Hilfselement in Form eines Spiegels in geeigneter Weise mit dem Schwungrad oder dergleichen verbunden wird. Des Weiteren ist auch eine Kombination solcher Möglichkeiten denkbar.

Es ist anzumerken, dass es sich bei dem Transportelement, dessen Geschwindigkeit richtungsabhängig bestimmt wird, je nach Ausgestaltung der Personentransportanlage vorzugsweise um eine Aufzugskabine, eine Fahrtreppenstufe oder eine Fahrsteigpalette handelt. Der Bezug auf zumindest ein Transportelement ist hierbei so zu verstehen, dass in Bezug auf den jeweiligen Anwendungsfall, insbesondere bei einer Fahrtreppe und einem Fahrsteig, gegebenenfalls aber auch bei einem Aufzug, mehrere gemeinsam mit der gleichen Geschwindigkeit und in der gleichen Richtung bewegte Transportelemente vorgesehen sind. Dadurch werden insbesondere ein Stufenband oder ein Palettenband gebildet, wobei mit der Einrichtung die Bestimmung der Geschwindigkeit und der Bewegungsrichtung eines Stufenbandes oder Palettenbandes möglich ist. Für weitere, davon unabhängige Stufenbänder oder Palettenbänder und gegebenenfalls Aufzugskabinen kann dann eine weitere Einrichtung zur Betriebszustandsbestimmung, insbesondere zur Geschwindigkeitsmessung, vorgesehen sein.

Vorteilhaft ist es, dass die Anordnung aus den optischen Hilfselementen so ausgestaltet ist, dass die Flächenschwerpunkte der optischen Hilfselemente zumindest näherungsweise auf dem Radius bezüglich der Drehachse angeordnet sind, auf dem sich die Erfassungsstelle befindet, und dass die optische Erfassungseinrichtung so ausgestaltet ist, dass die Erfassung an der Erfassungsstelle mit einer Auflösung in der Umfangsrichtung erfolgt, die eine Zuordnung der optischen Hilfselemente zu der ersten Ausgestaltungsart und der zweiten Ausgestaltungsart ermöglicht. Beispielsweise kann die Erfassungseinrichtung ein lichtempfindliches Element, insbesondere eine Fotodiode, aufweisen, vor der eine Blende angeordnet ist. Über die Größe der Blendenöffnung ist dann die Auflösung einstellbar, um den Einfluss von Streulicht aus einer geeigneten Lichtquelle, die durch oder über das optische Hilfselement auf das lichtempfindliche Element strahlt, zu begrenzen. Speziell bei zwei nahe aneinander angeordneten optischen Hilfselementen wird hierdurch auch eine ausreichend scharfe Trennung der optischen Hilfselemente voneinander erzielt.

In vorteilhafter Weise unterscheiden sich die optischen Hilfselemente der ersten Ausgestaltungsart und die optischen Hilfselemente der zweiten Ausgestaltungsart durch unterschiedliche Ausdehnungen in der Umfangsrichtung auf dem Radius bezüglich der Drehachse, auf dem sich die Erfassungsstelle befindet. Dadurch ergibt sich bei einer bestimmten Drehzahl eine unterschiedliche Pulsdauer für die optischen Hilfselemente der unterschiedlichen Ausgestaltungsarten. Die unterschiedlichen Ausdehnungen in der Umfangsrichtung sind hierbei so vorgegeben, dass sich auch bei Drehzahländerungen ein ausreichend großer Unterschied zwischen den aufeinanderfolgenden Pulsen ergibt. Bei einer Verdoppelung der Drehzahl ergibt sich dann zwar idealisiert eine Halbierung der Pulsdauer, das Verhältnis der Pulsdauern von zwei bestimmten, nahe aufeinanderfolgenden optischen Hilfselemente bleibt aber auch während der Drehzahländerung näherungsweise konstant. Unter Berücksichtigung der vorangehend beschriebenen Voraussetzungen, können die optischen Hilfselemente grundsätzlich eine beliebige Form aufweisen.

In vorteilhafter Weise sind die optischen Hilfselemente zumindest näherungsweise kreisförmig ausgestaltet, wobei sich die optischen Hilfselemente der ersten Ausgestaltungsart und die optischen Hilfselemente der zweiten Ausgestaltungsart durch unterschiedliche Kreisradien ihrer kreisförmigen Ausgestaltungen unterscheiden. Beispielsweise können die optischen Hilfselemente durch Bohrungen in der Schwungscheibe ausgestaltet werden, wobei für die verschiedenen Ausgestaltungsarten unterschiedliche Bohrungsdurchmesser vorgegeben sind. Beispielsweise können sich die Bohrungsdurchmesser einer ersten Ausgestaltungsart und einer zweiten Ausgestaltungsart um einen Faktor 2 unterscheiden. Im Betrieb ergibt sich dann zumindest näherungsweise ein Unterschied in der Pulsbreite, der dem vorgegebenen Faktor, beispielsweise dem Faktor 2, entspricht.

Bei einer abgewandelten Ausgestaltung können die optischen Hilfselemente in vorteilhafter Weise zumindest näherungsweise ellipsenförmig ausgestaltet sein, wobei sich die optischen Hilfselemente der ersten Ausgestaltungsart und die optischen Hilfselemente der zweiten Ausgestaltungsart durch unterschiedliche Haupt- bzw. Nebenachsen, die in der Umfangsrichtung orientiert sind, unterscheiden. Bei dieser Ausgestaltung ist somit diejenige Achse der Ellipse entscheidend, die in der Umfangsrichtung orientiert ist, wobei es sich hierbei um die Haupt- oder Nebenachse handelt. Hierbei können beispielsweise auch deckungsgleiche Ausgestaltungen für die erste Ausgestaltungsart und die zweite Ausgestaltungsart realisiert werden, wenn einmal die Hauptachse und das andere Mal die Nebenachse in der Umfangsrichtung orientiert ist.

Bei einer weiteren möglichen Ausgestaltung sind die optischen Hilfselemente einer Ausgestaltungsart zumindest näherungsweise ellipsenförmig und die der anderen Ausgestaltungsart zumindest näherungsweise kreisförmig ausgestaltet, wobei die Haupt- oder Nebenachse der elliptischen Ausgestaltung der optischen Hilfselemente der einen Ausgestaltungsart, die in der Umfangsrichtung orientiert ist, und ein Durchmesser der optischen Hilfselemente der anderen Ausgestaltungsart unterschiedlich groß vorgegeben sind. Bei dieser Ausgestaltung ist es insbesondere denkbar, dass die elliptische Ausgestaltung bezüglich der Achse, also der Haupt- beziehungsweise Nebenachse, die nicht in der Umfangsrichtung orientiert ist, eine dementsprechend senkrecht zur Umfangsrichtung gegebene Ausdehnung hat, die gleich dem Durchmesser der optischen Hilfselemente der anderen Ausgestaltungsart ist. Hierdurch können insbesondere vergleichbare Signalstärken, aber unterschiedliche Pulsdauern, durch die verschiedenen Ausgestaltungsarten realisiert werden.

Selbstverständlich sind anstelle von kreisrunden oder elliptischen Formen auch mehreckige oder bogenförmige Formen, wie beispielsweise ein bogenförmiges Langloch realisierbar.

Es versteht sich, dass auch mehr als zwei Ausgestaltungsarten realisiert sein können, wobei unterschiedliche Kombinationen zur Ausgestaltung der optischen Hilfselemente denkbar sind. Die Bestimmung der Drehrichtung ist jedoch bereits mit zwei unterschiedlichen Ausgestaltungsarten der optischen Hilfselemente realisierbar und vorzugsweise sind auch genau beziehungsweise nur zwei unterschiedliche Ausgestaltungsarten realisiert. Diese vorteilhafte Realisierung beinhaltet allerdings die Möglichkeit, von jeder Ausgestaltungsart ein, zwei oder auch mehr optische Hilfselemente vorzusehen. Mit der Anzahl der optischen Hilfselemente, die je Ausgestaltungsart vorgesehen sind, erhöht sich bei gegebener Drehzahl der Anordnung aus den optischen Hilfselementen, die um ihre Drehachse rotieren, die Frequenz des Messsignals. Dies kann unter anderem auch zur Gewinnung weiterer Informationen vorteilhaft sein, beispielsweise um einen Stillstand, also eine Geschwindigkeit von Null, oder eine beginnende Bewegung ausgehend von einem Stillstand festzustellen.

Vorteilhaft ist es, dass die Erfassungseinrichtung bei der Rotation der Anordnung aus den optischen Hilfselementen ein erstes optisches Hilfselement der ersten Ausgestaltungsart und ein zweites optisches Hilfselement der zweiten Ausgestaltungsart basierend auf zeitlichen Abständen zwischen den aufeinanderfolgenden optischen Hilfselementen einander zeitlich geordnet zuordnet, um die Drehrichtung der Anordnung zu bestimmen. Vorzugsweise sind hierbei optische Hilfselemente von genau zwei Ausgestaltungsarten vorgesehen, wobei die optischen Hilfselemente der beiden Ausgestaltungsarten in Umfangsrichtung ungleichmäßig verteilt angeordnet sind. Weiter vorzugsweise sind hierbei die optischen Hilfselemente der beiden Ausgestaltungsarten, die jeweils einander zugeordnet werden sollen, nahe beieinander auf dem Umfang, auf dem die Erfassungsstelle liegt, angeordnet. Hierbei ist zwischen den beiden optischen Hilfselementen vorzugsweise ein gewisser Abstand realisiert, der je nach Ausgestaltung auch zwingend erforderlich sein kann, um eine entsprechende Auflösung zu ermöglichen. Dieser Abstand kann beispielsweise so groß vorgegeben sein, dass dieser näherungsweise gleich der kleineren, in Umfangsrichtung betrachteten Ausdehnung der beiden optischen Hilfselemente ist.

Vorteilhaft ist es, dass die Erfassungseinrichtung das erste optische Hilfselement und das zweite optische Hilfselement derart einander zeitlich geordnet zuordnet, dass das zweite optische Hilfselement dem vorangegangenen ersten optischen Hilfselement zugeordnet wird, wenn der zeitliche Abstand zwischen diesem ersten optischen Hilfselement und diesem zweiten optischen Hilfselement kürzer ist als der zeitliche Abstand zwischen dem zweiten optischen Hilfselement und einem folgenden optischen Hilfselement der ersten Ausgestaltungsart.

Und weiter ist es vorteilhaft, dass das erste optische Hilfselement dem vorangegangenen zweiten optischen Hilfselement zugeordnet wird, wenn der zeitliche Abstand zwischen diesem zweiten optischen Hilfselement und diesem ersten optischen Hilfselement kürzer ist als der zeitliche Abstand zwischen dem ersten optischen Hilfselement und einem folgenden optischen Hilfselement der zweiten Ausbildungsart. Somit erfolgt zum einen eine Zuordnung, insbesondere eine paarweise Zuordnung, der nahe beieinander liegenden optischen Hilfselemente. Aus der Reihenfolge, insbesondere der Reihenfolge beziehungsweise Ordnung der Paarung, ergibt sich dann die Drehrichtung. Somit ist eine insbesondere an einer Schwungscheibe eines Antriebsmotors oder dergleichen auf einfache Weise realisierbare Möglichkeit angegeben, um die momentane Drehrichtung zu bestimmen. Darüber hinaus können die gewonnenen Signale in vorteilhafter Weise weiter verarbeitet werden, um weitere Informationen zu gewinnen.

Vorteilhaft ist es auch, dass mehrere optische Hilfselemente der ersten Ausgestaltungsart und mehrere optische Hilfselemente der zweiten optischen Ausgestaltungsart vorgesehen sind, die bezüglich ihrer Ausgestaltungsarten in der Umfangsrichtung abwechselnd angeordnet sind. Somit kann durch optische Hilfselemente von genau zwei Ausgestaltungsarten im Betrieb auf einfache Weise ein Signal gewonnen werden, das zudem einfach auszuwerten ist. Bei solch einer Ausgestaltung kann es beispielsweise ausreichen, für die Zuordnung der optischen Hilfselemente zueinander lediglich die Abstände zwischen den Hilfselementen auszuwerten und zur Bestimmung der Art des Hilfselements lediglich die Pulsbreite auszuwerten, wobei diese Auswertungen jeweils durch einen einfachen Vergleich aufeinanderfolgender Werte möglich ist. Somit wird sowohl in Bezug auf die erforderliche Verarbeitungsleistung als auch auf den erforderlichen Speicherbedarf eine erhebliche Optimierung erzielt, ohne dass die Gesamtanzahl der optischen Hilfselemente hierdurch begrenzt ist. Speziell können eine geeignete Anzahl an Paaren optischer Hilfselemente der ersten und zweiten Ausgestaltungsart in regelmäßigen Abständen über den Umfang, auf dem sich die Erfassungsstelle befindet, verteilt werden. Speziell bei einer Ausgestaltung der optischen Hilfselemente, die eine lokale Masseänderung zur Folge hat, wie bei Bohrungen, Löchern oder zusätzlich befestigten optischen Hilfselementen, kann hierdurch eine symmetrische Anordnung erzielt werden. Dadurch können Unwuchten vermieden werden. Somit ist es vorteilhaft, wenn auf diese oder andere Weise die Anordnung aus den optischen Hilfselementen axialsymmetrisch ausgestaltet ist.

Des Weiteren ist es somit vorteilhaft, dass eine Verarbeitungseinrichtung vorgesehen ist, die zur Berechnung von Informationen über einen Betriebszustand aus zeitlichen Abständen zwischen einander zugeordneten optischen Hilfselementen, die von der Erfassungseinrichtung an der Erfassungsstelle erfasst werden, und/oder aus zeitlichen Abständen zwischen einander nicht zugeordneten optischen Hilfselementen, die von der Erfassungseinrichtung an der Erfassungsstelle erfasst werden, dient, dass diese Informationen vorzugsweise einen Geschwindigkeitswert für das Transportelement und/oder einen Beschleunigungswert für das Transportelement und/oder eine Stillstandinformation bezüglich des Transportelements umfassen und dass die Verarbeitungseinrichtung diese Informationen vorzugsweise fortlaufend aktualisiert und/oder vorzugsweise zumindest zwei Informationen zur Kontrolle miteinander vergleicht. Wenn beispielsweise Paare von jeweils zwei optischen Hilfselementen der ersten und der zweiten Ausgestaltungsart gleichmäßig über den Umfang, an dem die Erfassung erfolgt, verteilt sind, dann können die Abstände zwischen den Paaren herangezogen werden, um die Drehzahl und/oder eine Drehzahländerung und/oder einen Stillstand der Anordnung aus den optischen Hilfselementen zu bestimmen. Da die Anordnung beispielsweise auf dem Schwungrad der Antriebsmaschineneinheit angeordnet ist, ergibt sich durch einfache Umrechnung mit einem Umrechnungsfaktor in der Regel direkt der Geschwindigkeitswert beziehungsweise der Beschleunigungswert beziehungsweise die Stillstandinformation für das Transportelement. Die Stillstandinformation kann hierbei so gewonnen werden, dass die Zeit gemessen wird, in der keine Änderung an der Erfassungsstelle erfolgt, und beim Überschreiten eines vorbestimmten Grenzwerts ein Stillstand erkannt wird. Keine Änderung in der Erfassung erfolgt, wenn entweder durchgehend kein optisches Hilfselement an der Erfassungsstelle erfasst wird oder durchgehend ein optisches Hilfselement an der Erfassungsstelle erfasst wird. Bei der bereits genannten, beispielhaften Ausgestaltung kann dann mit zunehmender Anzahl an Paaren von optischen Hilfselementen der Grenzwert entsprechend verringert werden. Hierdurch kann innerhalb praktischer Grenzen die Auflösung für die Stillstandinformation verfeinert werden. Beim Kontrollvergleich können beispielsweise zwei aufeinanderfolgend ermittelte Geschwindigkeitswerte genutzt werden, um mögliche Fehlmessungen zu erkennen oder um die Messgenauigkeit zu erhöhen.

Vorteilhaft ist es, dass eine Betriebsbremse und eine Steuereinrichtung, die eine Ansteuerung der Betriebsbremse ermöglicht, vorgesehen sind, und dass die Steuereinrichtung in Abhängigkeit von den durch die Verarbeitungseinrichtung bestimmten Informationen über den Betriebszustand die Betriebsbremse für einen bestimmten Bremsvorgang so ansteuert, dass das Transportelement in einer vorbestimmten Position anhält. Der bestimmte Bremsvorgang kann hierbei der einzige reguläre Bremsvorgang sein. Der bestimmte Bremsvorgang muss jedoch nicht der einzig mögliche Bremsvorgang sein, da die Betriebsbremse gegebenenfalls auch für einen Nothalt oder dergleichen auf abweichende Weise angesteuert werden kann. Das Anhalten des Transportelements in einer vorbestimmten Position ist so zu verstehen, dass bei einer Personentransportanlage, die als Fahrtreppe oder Fahrsteig ausgebildet ist, eines der Transportelemente eines Stufenbandes beziehungsweise Palettenbandes in eine bevorzugte Stellung gelangt, die in der Regel den Ein- oder Ausstieg betrifft. Beispielsweise kann bei einem Stufenband einer Fahrtreppe (Fahrtreppe) ein definierter Stufenstopp gewünscht sein, damit bei stillstehender Fahrtreppe unter Vermeidung von Tritthöhenunterschieden oder dergleichen eine Benutzung als normale Treppe möglich ist. Um eine vordefinierte Position der Stufen beim Stillstand zu erreichen, kann beispielsweise ein Stufenspalt des Stufenbandes genau zur diesbezüglichen Kammplatte ausgerichtet werden. Somit können die gewonnenen Informationen in vorteilhafter Weise genutzt werden, um die Betriebsbremse so zu aktivieren, dass das Stufenband der Fahrtreppe in der vorbestimmten Position anhält.

Bei einer abgewandelten Ausgestaltung können die Hilfselemente auch auf eine nicht optische Weise erfasst werden. Wenn die Hilfselemente beispielsweise als Löcher oder durch aufgesetzte Metallplatten ausgestaltet sind, dann können diese auch mit einem Induktivsensor abgetastet werden, welcher daraus Pulse generiert. Die Hilfselemente können dann als Vertiefungen und/oder Öffnungen und/oder aufgesetzte Metallplatten ausgestaltet sein, um lokal eine Stelle zu bilden, die induktiv erfassbare Änderungen auf dem Umfang der Erfassungsstelle bedingt. Die Erfassungseinrichtung ist dann vorzugsweise so ausgestaltet, dass die Hilfselemente über einen Induktivsensor abgetastet und somit induktiv erfasst werden.

Somit kann bei einer bevorzugten Ausführungsvariante zur Geschwindigkeitsmessung das Schwungrad des Antriebsmotors mit Löchern versehen werden. Auch aufgesetzte Metallplatten, die an das Schwungrad angebracht werden, können zur Geschwindigkeitsmessung zum Einsatz kommen. Die Löcher beziehungsweise Metallplatten können permanent mit einem Induktivsensor abgetastet werden, welcher daraus Pulse generiert. Ein von der Drehrichtung abhängiges Pulsbild ergibt sich dann in der beschriebenen Weise, was entsprechend zu einer Ausgestaltung mit optischen Hilfselementen durch induktiv wirksame Hilfselemente möglich ist.

Somit kann der Geschwindigkeitsmessung noch eine Drehrichtungserkennung beziehungsweise Laufrichtungserkennung des Transportelements hinzugefügt werden, ohne dass das grundsätzliche Verfahren und zum Einsatz kommende Bauteile in erheblichem Umfang angepasst werden müssten.

Ferner ergibt sich aus den bereits ausgeführten Gründen, dass ein oder mehrere zusätzliche Funktionen ohne großen Mehraufwand realisiert werden können. Hierbei kann zudem die heute kostengünstig verfügbare, hohe Rechen- und Speicherleistung von Mikroprozessoren und Datenspeichereinheiten genutzt werden, die in der Regel in modernen Personentransportanlagen, insbesondere Fahrtreppen und Fahrsteigen, ohnehin verbaut werden. Aus dem Pulsbild können somit weitere Informationen errechnet werden, die neben der Geschwindigkeit und der Drehrichtung für Steuerfunktionen, zur Wartung und Fehlersuche oder dergleichen genutzt werden können.

Hinsichtlich der Generierung des Pulsbildes kann die Erfassungseinrichtung außerdem kostengünstig ausgeführt werden. Speziell kann die Erfassungseinrichtung auf nur einem Sensor basieren. Hierbei können auch besonders kostengünstige Sensoren, wie ein lichtempfindliches Element, insbesondere eine Fotodiode, genutzt werden. In diesem Zusammenhang kann insbesondere eine Realisierung entsprechend dem Prinzip einer Lichtschranke erfolgen. Somit können wesentlich kostengünstigere Lösungen, als es beispielsweise mit einem Encoder möglich ist, realisiert werden.

Außerdem sind auch Abwandlungen von dem Prinzip einer einfachen Lichtschranke möglich. Beispielsweise können die Hilfselemente auch dadurch in verschiedenen Ausgestaltungsarten realisiert werden, indem diese zu unterschiedlichen Intensitäten des Signals führen. Beispielsweise kann ein Lichtstrahl, der über die Hilfselemente geführt und von der Erfassungseinrichtung abgetastet wird, bei einer Ausgestaltungsart einen Graufilter passieren, während bei der anderen Ausgestaltungsart solch ein Graufilter nicht vorgesehen ist. In diesem Fall unterscheiden sich die einzelnen Pulse des erzeugten elektrischen Signals in ihrer Amplitude. Da vorzugsweise die Pulse eines zusammengehörenden Paares von Hilfselementen (oder auch einer zusammengehörenden Folge von Hilfselementen, wenn mehr als zwei Hilfselemente zusammengehören können) vorzugsweise nahe beieinander angeordnet sind und somit direkt hintereinander erfasst werden können, kann im allgemeinen ein Pulsvergleich hinsichtlich ein oder mehrerer Eigenschaften erfolgen, um zu entscheiden, welcher Impuls von welcher Ausgestaltungsart ist. Somit können relative Entscheidungskriterien genutzt werden, die den Vorteil haben, dass diesbezüglich kein Referenzwert erforderlich ist. Somit ist die Einrichtung auch tolerant gegenüber etwaigen Verstimmungen, Temperaturdrift (Temperaturwanderung) und dergleichen.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
Figur 1 eine als Fahrtreppe ausgebildete Personentransportanlage mit einer Einrichtung zur Betriebszustandsbestimmung, insbesondere zur Geschwindigkeitsmessung, in einer auszugsweisen, schematischen Darstellung entsprechend einem ersten Ausführungsbeispiel der Erfindung;
Figur 2 ein Detail der in Figur 1 dargestellten Personentransportanlage entsprechend dem ersten Ausführungsbeispiel der Erfindung;
Figur 3 ein Detail der in Figur 1 dargestellten Personentransportanlage entsprechend einem zweiten Ausführungsbeispiel der Erfindung und
Figur 4 einen Signalplan zur Erläuterung der Funktionsweise der Erfindung entsprechend einer möglichen Ausgestaltung der Einrichtung zur Betriebszustandsbestimmung.

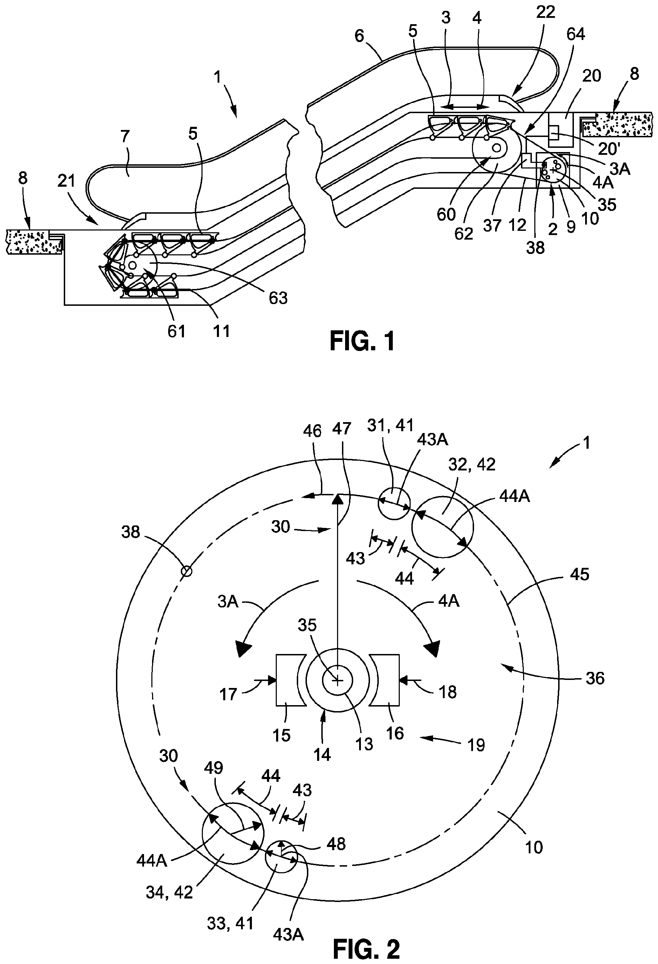

Figur 1 zeigt eine Personentransportanlage 1 mit einer Einrichtung 2 zur Betriebszustandsbestimmung in einer auszugsweisen, schematischen Darstellung entsprechend einem ersten Ausführungsbeispiel. Die Personentransportanlage 1 ist exemplarisch als Fahrtreppe 1 ausgebildet. Bei einer abgewandelten Ausgestaltung kann die Personentransportanlage 1 auch als Fahrsteig ausgebildet sein. Ferner kann die Einrichtung 2 gegebenenfalls in geeigneter Weise genutzt werden, um eine Betriebszustandsbestimmung bei einem Aufzug zu realisieren. Die Einrichtung 2 dient insbesondere zur Geschwindigkeitsmessung. Hierbei ermöglicht die Einrichtung 2 die Bestimmung weiterer Informationen und insbesondere die Bestimmung der momentanen Bewegungsrichtung 3, 4 eines Transportelements 5 der Personentransportanlage 1.

Das Transportelement 5 ist entsprechend der Ausgestaltung der Personentransportanlage 1 ausgebildet. Es versteht sich, dass bei Fahrtreppen oder Fahrsteigen ein umlaufendes Stufenband beziehungsweise Palettenband vorgesehen ist, wobei hier exemplarisch ein solches Transportelement 5 als Element des Stufenbandes beziehungsweise Palettenbandes betrachtet wird. Bei einer denkbaren Ausgestaltung der Personentransportanlage 1 als Aufzug 1 handelt es sich bei dem Transportelement 5 um die Aufzugkabine.

Die Personentransportanlage 1 weist mindestens einen Handlauf 6 und mindestens eine Balustrade 7 auf. Der Handlauf 6 und die Balustrade 7 befinden sich zumindest im Wesentlichen oberhalb der Etagenböden 8 eines Gebäudes. Unterhalb der Etagenböden 8 ist in diesem Ausführungsbeispiel eine Antriebsmaschineneinheit 9 vorgesehen, wofür eine geeignete Grube realisiert ist. Die Antriebsmaschineneinheit 9 weist einen elektrischen Antriebsmotor sowie ein Schwungrad 10 auf. Das Schwungrad 10 wirkt mit mindestens einem Zugmittel 11 zusammen, das zum Übertragen der Zugkraft der Antriebsmaschineneinheit 9 auf das Transportelement 5 dient. Im dargestellten Ausführungsbeispiel bilden das mindestens eine Zugmittel 11 und eine Mehrzahl daran angeordnete Transportelemente 5 zusammen das Stufenband, welches zwischen zwei Umlenkbereichen 60, 61 über Umlenkräder 62, 63 umlaufend geführt ist. Das mit der Antriebsmaschineneinheit 9 verbundene Umlenkrad 62 ist Teil eines Antriebsstranges 64.

Hierbei sind geeignete Abwandlungen denkbar, bei denen anstelle des Schwungrads 10 ein anderes Rad 10 zum Einsatz kommt. Solch ein Rad 10 kann beispielsweise auch ein Rad 10 des Antriebsstranges 64 oder das Umlenkrad 62 sein, das Teil eines Untersetzungsgetriebes der Personentransportanlage 1 ist und sich entsprechend einer Bewegung des Transportelements 5 dreht.

In diesem Ausführungsbeispiel bedingt eine Rotation des Schwungrads 10 in einer Drehrichtung 3A eine Bewegung des Transportelements 5 in der Bewegungsrichtung 3. Entsprechend bewegt sich das Transportelement 5 in der Bewegungsrichtung 4, wenn das Schwungrad 10 in der Drehrichtung 4A rotiert. Hierfür ist eine geeignete Verbindung 12 beziehungsweise Kopplung 12 zwischen dem Transportelement 5 und dem Zugmittel 11 realisiert, die je nach Ausgestaltung der Personentransportanlage 1 über einen begrenzten Transportweg oder permanent, wie es bei einem Aufzug der Fall ist, besteht.

Im Folgenden wird die Personentransportanlage 1 auch unter Bezugnahme auf die Figur 2 weiter erläutert, die ein zusätzliches Detail zeigt.

Figur 2 zeigt ein Detail der in Figur 1 dargestellten Personentransportanlage 1 entsprechend dem ersten Ausführungsbeispiel. Hierbei ist das Schwungrad 10 dargestellt, das von einer Abtriebswelle 13 der Antriebsmaschineneinheit 9 angetrieben ist. Zudem ist auf der Abtriebswelle 13 schematisch eine Bremsbahn 14 realisiert. Bremsschuhe 15, 16 können über Anpresskräfte 17, 18 an die Bremsbahn 14 gedrückt werden, um das Schwungrad 10 zu bremsen. Hierdurch ist eine Betriebsbremse 19 realisiert. Die Betriebsbremse 19 ist hierbei von einer Steuereinrichtung 20 der Personentransportanlage 1 ansteuerbar. Im Betrieb der Personentransportanlage 1 kann es sinnvoll sein, dass das bewegte Transportelement 5 bei einer gewünschten Bremsung an einer bestimmten Stelle zur Ruhe kommt. Dies betrifft beispielsweise den Fall, dass das Transportelement 5 aufgrund der Bremsung an einem der Endbereiche 21, 22, an denen ein Ein- oder Ausstieg erfolgt, zur Ruhe kommt. Es sei daraufhingewiesen, dass dies bei einer Fahrtreppe oder einem Fahrsteig regelmäßig zumindest ein Transportelement 5 des umlaufenden Stufenbandes beziehungsweise Palettenbandes betrifft.

Die Einrichtung 2 zur Betriebszustandsbestimmung weist eine Anordnung 30 aus Hilfselementen 31 bis 34 auf. Die Hilfselemente 31 bis 34 sind in diesem Ausführungsbeispiel als optische Hilfselemente 31 bis 34 ausgestaltet, was eine bevorzugte Ausgestaltung darstellt. Die Hilfselemente 31 bis 34 können hierbei um die Drehachse 35 der Anordnung 30 rotieren. Hierbei rotiert die Anordnung 30 der Hilfselemente 31 bis 34 in einer Weise, dass unter anderem die Abstände zwischen den Hilfselementen 31 bis 34 konstant und die Ausgestaltung der einzelnen Hilfselemente 31 bis 34 innerhalb der Anordnung 30 unverändert ist. Es kommt also zu keiner Lageänderung oder relativen Drehung einzelner Hilfselemente 31 bis 34 relativ zu anderen Hilfselementen 31 bis 34 der Anordnung 30.

Die Hilfselemente 31 bis 34 können als lichtdurchlässige optische Hilfselemente 31 bis 34 oder als lichtreflektierende optische Hilfselemente 31 bis 34 ausgebildet sein. Beispielsweise können die Hilfselemente 31 bis 34 durch Bohrungen in dem Rad 10 ausgebildet sein. Ferner können die optischen Hilfselemente 31 bis 34 durch Spiegel 31 bis 34 ausgebildet sein, die auf einer Seite 36 des Rades 10 ausgebildet sind. Die Hilfselemente 31 bis 34 können selbstverständlich auch auf dem Rad aufgemalt sein, beispielsweise mit reflektierender oder mattschwarzer Farbe.

Hilfselemente 31 bis 34 welche als Spiegelelemente 31 bis 34 ausgestaltet sind, können auch unabhängig von dem Rad 10 hergestellt und vertrieben werden. Denkbar ist es beispielsweise, dass ein Ring, der lichtreflektierende optische Hilfselemente 31 bis 34 umfasst, auf die Seite 36 des Rades 10 aufgeklebt wird, um die Hilfselemente 31 bis 34 in die Personentransportanlage 1 zu integrieren.

Die Einrichtung 2 weist außerdem eine Erfassungseinrichtung 37 auf, mit der erfassbar ist, ob sich an einer bestimmten Erfassungsstelle 38 gerade eines der Hilfselemente 31 bis 34 befindet oder nicht. Die Erfassungsstelle 38 ist hierbei so lokalisiert, dass bei einer Rotation der Anordnung 30 die Hilfselemente 31 bis 34 nacheinander die Erfassungsstelle 38 passieren. Beispielsweise kann die Erfassungseinrichtung 37 eine lichtempfindliche Diode aufweisen, wobei entsprechend dem Prinzip einer Lichtschranke die Hilfselemente 31 bis 34 die ausgesendete Strahlung einer Leuchtdiode passieren lassen, während das Rad 10 ansonsten die Strahlung blockiert.

Somit kann die Erfassungseinrichtung 37 bei solch einer Ausgestaltung auf optische Weise erfassen, ob sich eines der Hilfselemente 31 bis 34 gerade an der Erfassungsstelle 38 befindet oder nicht. Bei einer abgewandelten Ausgestaltung kann die Erfassungseinrichtung 37 auf induktive Weise erfassen, ob sich gerade eines der Hilfselemente 31 bis 34 an der Erfassungsstelle 38 befindet oder nicht. Die Hilfselemente 31 bis 34 können dann beispielsweise als Vertiefungen und/oder Öffnungen und/oder aufgesetzte Metallplatten, die an der Seite 36 befestigt sind, ausgestaltet sein.

Die Hilfselemente 31 bis 34 sind in diesem Ausführungsbeispiel auf zwei verschiedene Arten ausgestaltet, wodurch sich Ausgestaltungsarten 41, 42 ergeben. Hierbei entsprechen sich die Hilfselemente 31, 33 in ihrer Ausgestaltung, die hier beispielsweise als erste Ausgestaltungsart 41 bezeichnet ist. Ferner entsprechen sich die Hilfselemente 32, 34 in ihrer Ausgestaltung, die hier beispielsweise als zweite Ausgestaltungsart 42 bezeichnet ist.

Ein wesentlicher Unterschied der Ausgestaltungsarten 41, 42 betrifft einen ersten Winkel 43 und einen zweiten Winkel 44, über die sich die Hilfselemente 31 bis 34 der Ausgestaltungsarten 41, 42 auf einer unterbrochen dargestellten Umfangslinie 45, auf der sich die Erfassungsstelle 38 befindet, erstrecken. Hierbei ist der erste Winkel 43, der eine Eigenschaft der ersten Ausgestaltungsart 41 darstellt, zweimal realisiert, nämlich für die Hilfselemente 31, 33. Entsprechend ist der zweite Winkel 44, der eine Eigenschaft der zweiten Ausgestaltungsart 42 ist, zweimal realisiert, nämlich für die Hilfselemente 32, 34. Dem ersten Winkel 43 entspricht eine erste Ausdehnung 43A entlang des Umfangs 45 beziehungsweise der Umfangslinie 45, so dass die Hilfselemente 31, 33 die erste Ausdehnung 43A in einer (beliebigen) Umfangsrichtung 46 auf dem Radius 47 bezüglich der Drehachse 35, auf dem sich die Erfassungsstelle 38 befindet, haben. In entsprechender Weise resultiert aus dem zweiten Winkel 44 eine zweite Ausdehnung 44A auf der Umfangslinie 45 beziehungsweise in der Umfangsrichtung 46 auf dem Radius 47 bezüglich der Drehachse 35 für die Hilfselemente 32, 34 der zweiten Ausgestaltungsart 42.

Die Hilfselemente 31 bis 34 sind in diesem Ausführungsbeispiel kreisförmig ausgestaltet, wobei sich die Ausgestaltungsarten 41, 42 durch unterschiedliche Kreisradien 48, 49 ihrer kreisförmigen Ausgestaltungen 41, 42 unterscheiden. Beispielsweise können die Kreisradien 48, 49 so vorgegeben sein, dass der zweite Winkel 44 doppelt so groß ist wie der erste Winkel 43 beziehungsweise dass die zweite Ausdehnung 44A entlang der Umfangslinie 45 doppelt so groß ist wie die erste Ausdehnung 43A entlang der Umfangslinie 45.

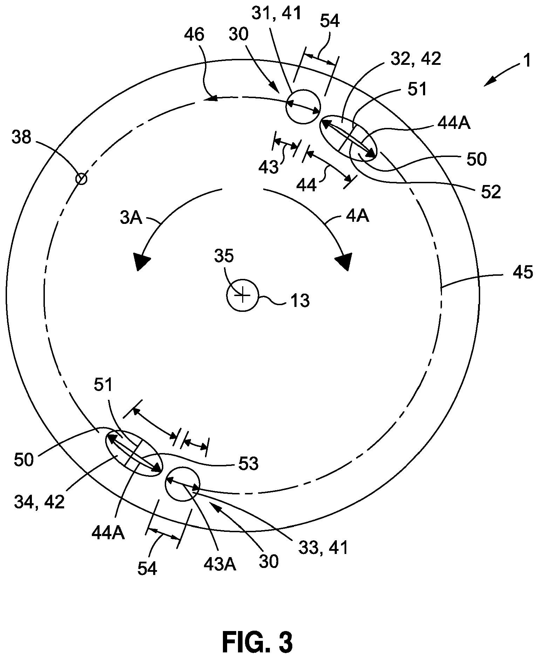

Eine wesentliche Eigenschaft der verschiedenen Ausgestaltungsarten 41, 42 stellen somit die Ausdehnungen 43A, 44A der Hilfselemente 31 bis 34 entlang der Umfangslinie 45 beziehungsweise in der Umfangsrichtung 46 dar, was den Winkeln 43, 44 entspricht. Diese wesentliche Eigenschaft ist auch auf andere Weise erzielbar und nicht auf die beschriebenen kreisförmigen Geometrien der Ausgestaltungsarten 41, 42 begrenzt. Allerdings ermöglichen kreisförmige Ausgestaltungen die Ausbildung der Hilfselemente 31 bis 34 in Form von Bohrungen, die jeweils auf der Umfangslinie 45 zentriert sind. Eine weitere mögliche Ausgestaltungsvariante ist in der Figur 3 dargestellt und nachfolgend beschrieben.

Figur 3 zeigt ein Detail der in Figur 1 dargestellten Personentransportanlage 1 entsprechend einem zweiten Ausführungsbeispiel der Erfindung. In diesem Ausführungsbeispiel sind die Hilfselemente 31, 33 entsprechend der anhand der Figur 2 beschriebenen ersten Ausgestaltungsart 41 kreisförmig ausgebildet. Allerdings ist für die zweite Ausgestaltungsart 42, die die Hilfselemente 32, 34 betrifft, eine abgewandelte Ausgestaltung realisiert. Hierbei ist in diesem Ausführungsbeispiel eine elliptische Ausgestaltung vorgesehen, die sich durch eine Hauptachse 50 und eine Nebenachse 51 auszeichnet. Die Hauptachse 50 ist hierbei senkrecht zu dem Radius 47 orientiert. Entsprechend ist die Nebenachse 51 senkrecht zu der Umfangslinie 45 beziehungsweise senkrecht zu der Umfangsrichtung 46 orientiert. Hierbei ist zu beachten, dass sich die Hauptachse 50 und die Nebenachse 51 nicht genau auf der Umfangslinie 45 schneiden, sondern dass in diesem Ausführungsbeispiel der jeweilige Schnittpunkt 52, 53 von der Umfangslinie 45 etwas radial nach innen versetzt ist, wodurch die Umfangslinie 45 jeweils einen Scheitelpunkt der Ellipse schneidet.

Hierbei sind weitere Abwandlungen denkbar. Beispielsweise ist auch eine Ausgestaltung möglich, bei der beide Ausgestaltungsarten 41, 42 durch Ellipsen realisiert sind. Ferner kann auch die Hauptachse 50 die Umfangslinie 45 senkrecht schneiden, so dass sich gegenüber der in der Figur 3 gezeigten Darstellung eine Drehung der Ellipsen der zweiten Ausgestaltungsart 42 um jeweils 90° ergibt.

Bei dem anhand der Figur 3 beschriebenen zweiten Ausführungsbeispiel ergeben sich die unterschiedlichen Winkel 43, 44 dadurch, dass der Durchmesser 54 der Hilfselemente 31, 33 und die Hauptachse 50 der Hilfselemente 32, 34 unterschiedlich groß vorgegeben sind. Beispielsweise kann die Hauptachse 50 zumindest näherungsweise doppelt so groß vorgegeben sein wie der Durchmesser 54.

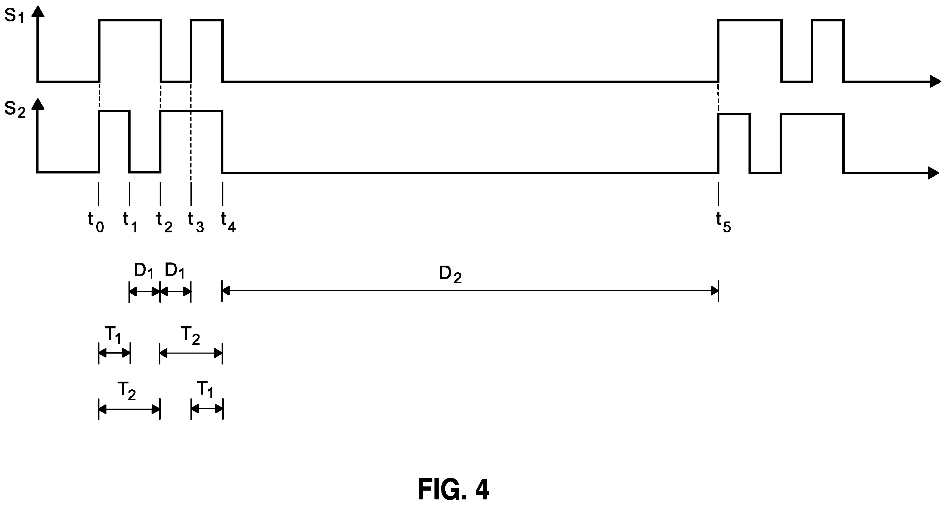

Figur 4 zeigt einen Signalplan zur Erläuterung der Funktionsweise der Erfindung entsprechend einer möglichen Ausgestaltung der Einrichtung 2 zur Betriebszustandsbestimmung einer Personentransportanlage 1. In dem Signalplan ist ein Signal S₁ idealisiert dargestellt, das sich bei einer möglichen Rotation des Rades 10 in der Drehrichtung 4A ergibt. Entsprechend ergibt sich das Signal S₂ bei einer Rotation in der Drehrichtung 3A.

Zunächst wird das Signal S₁ betrachtet. Zum Zeitpunkt t₀ gelangt beispielsweise das Hilfselement 32 gerade an die Erfassungsstelle 38, während eine Rotation in der Drehrichtung 4A erfolgt. Somit wird ab dem Zeitpunkt to bis zu dem Zeitpunkt t₂ erkannt, dass sich das Hilfselement 32 an der Erfassungsstelle 38 befindet, was entsprechend einer Lichtschranke erfasst werden kann. Zwischen den Zeitpunkten t₂ und t₃ befindet sich keines der Hilfselemente an der Erfassungsstelle 38. Zwischen den Zeitpunkten t₃ und t₄ befindet sich dann das Hilfselement 31 an der Erfassungsstelle 38. Zwischen den Zeitpunkten t₄ und t₅ ergibt sich kein Signal, und zum Zeitpunkt t₅ wird dann das Hilfselement 34 an der Erfassungsstelle 38 erfasst. Somit ergeben sich einmal der zeitliche Abstand D₁ zwischen den Zeitpunkten t₂ und t₃ und ein andermal der zeitliche Abstand D₂ zwischen den Zeitpunkten t₄ und t₅ zwischen den Signalen. Da der zeitliche Abstand D₂ größer ist als der zeitliche Abstand D₁ erkennt die Erfassungseinrichtung 37, dass der Puls zwischen dem Zeitpunkt t₀ und dem Zeitpunkt t₂ und der Puls zwischen dem Zeitpunkt t₃ und dem Zeitpunkt t₄ einander zugeordnet sind. Ferner folgt die kürzere Pulsweite T₁ auf die längere Pulsweite T₂, woraus die Erfassungseinrichtung 37 die Drehrichtung 4A bestimmt. Ferner können zwei der Zeitpunkte t₀ bis t₅ genutzt werden, um einen zeitlichen Abstand zu bestimmen, aus dem sich die Drehzahl des Rades 10 bestimmen lässt. Beispielsweise kann der zeitliche Abstand D₂ für solche eine Drehzahlbestimmung genutzt werden. Über einen Umrechnungsfaktor kann anstelle der Drehzahl natürlich auch direkt die Geschwindigkeit des Transportelements 5 bestimmt werden.

Grundsätzlich sind auch die Pulsweiten T₁ und T₂ von der Drehzahl beziehungsweise der Winkelgeschwindigkeit des Rades 10 abhängig. Daraus ergibt sich, dass auch die Pulsweiten T₁ und T₂ die Drehzahl repräsentieren und sich daraus die Geschwindigkeit des Transportelementes 5 errechnen lässt. Da die beiden Pulsweiten T₁, T₂ sehr nahe beieinander liegen, kann die aus der ersten Pulsweite T₁ errechnete Geschwindigkeit durch die aus der zweiten Pulsweite T₂ errechneten Geschwindigkeit verifiziert werden. Dazu muss eine theoretisch zu erwartende zweite Pulsweite aus der ersten Pulsweite T₁ errechnet, und mit der tatsächlich gemessenen zweiten Pulsweite T₂ verglichen werden. Ist die errechnete zweite Pulsweite gleich der gemessenen zweiten Pulsweite T₂, dann ist die Geschwindigkeit konstant. Ist die errechnete zweite Pulsweite kleiner als die gemessene zweite Pulsweite T₂, dann erfährt das Rad 10 zum Zeitpunkt der Messung eine Beschleunigung. Ist die errechnete zweite Pulsweite grösser als die gemessene zweite Pulsweite T₂, dann erfährt das Rad 10 zum Zeitpunkt der Messung eine Verzögerung. Bei der Ausgestaltung der Hilfselemente 31 bis 34 ist ferner darauf zu achten, dass die Winkel 43, 44 ausreichend unterschiedlich ausgestaltet sind, so dass Beschleunigungen und Verzögerungen der Winkelgeschwindigkeit nicht dazu führen, dass die Pulsweiten T₁ und T₂ nicht mehr voneinander unterscheidbar sind oder ein falsches Resultat beziehungsweise eine falsche Drehrichtung vortäuschen.

Bei dem Signal S₂ endet der erste Puls bereits zum Zeitpunkt t₁, während zum Zeitpunkt t₂ der nächste Puls bis zum Zeitpunkt t₄ erfolgt. Da der zeitliche Abstand D₂, der auf die beiden Pulse folgt, größer ist als der zeitliche Abstand D₁ zwischen den Pulsen, die zwischen den Zeitpunkten t₀ und t₄ auftreten, ordnet die Erfassungseinrichtung 37 die beiden Pulse zwischen den Zeitpunkten t₀ und t₄ einander zu. Da der Puls zum Zeitpunkt t₀ bis zum Zeitpunkt t₁ eine kürzere Pulsweite T₁ hat als der folgende Puls, der die Pulsweite T₂ hat, wird die Drehrichtung 3A bestimmt.

Somit ordnet die Erfassungseinrichtung 37 zwei Pulse einander zu, wenn der zeitliche Abstand D₁ dieser beiden Pulse kleiner ist als der zeitliche Abstand D₂ zu dem nachfolgenden Puls. Die einander zugeordneten Pulse werden dann bezüglich ihrer Pulsweite verglichen. Wenn eine kurze Pulsweite T₁ auf eine lange Pulsweite T₂ folgt, dann ergibt sich die Drehrichtung 4A. Im umgekehrten Fall ergibt sich die Drehrichtung 3A.

Aus den Pulsweiten T₂ oder aus den zeitlichen Abständen D₁, D₂ oder auch aus vergleichbaren zeitlichen Abständen können außerdem weitere Informationen berechnet werden. Speziell können eine Beschleunigung oder Verzögerung errechnet werden. Dies kann durch eine Verarbeitungseinrichtung 20', die insbesondere durch die Steuereinrichtung 20 realisiert sein kann, erfolgen, wenn die Erfassungseinrichtung 37 die entsprechenden Werte übermittelt. Ferner können auch numerische Auswertungen, die als Funktionen der Erfassungseinrichtung beschrieben sind, ganz oder teilweise durch die Steuereinrichtung 20 oder die Verarbeitungseinrichtung 20' realisiert sein.

Bei der Dimensionierung der Anordnung 30 aus den Hilfselementen 31 bis 34 ist zu beachten, dass die Größen und Abstände so bestimmt sind, dass die maximale Beschleunigung oder Verzögerung, die im Betrieb auftritt, nicht zu einem falschen Richtungsresultat führen kann. Somit muss auch bei Beschleunigungen oder Verzögerungen erkennbar bleiben, dass der zeitliche Abstand D₂ größer ist als der zeitliche Abstand D₁.

Ferner kann ein Stillstandkriterium realisiert werden. Hierfür kann die Erfassungseinrichtung 37 die Zeitdauer erfassen, während der keine Änderung an der Erfassungsstelle 38 auftritt, und beim Erreichen beziehungsweise Überschreiten eines Grenzwerts einen Stillstand erkennen.

Aus den gewonnenen Informationen kann außerdem die Betriebsbremse 19 so bestätigt werden, dass das Transportelement 5 insbesondere in den Endbereichen 21, 22 eine vordefinierte Position beim Stillstand erreicht.

Die Erfindung ist nicht auf die beschriebenen Ausführungsbeispiele beschränkt.

Beispielsweise können die optischen Hilfselemente eine beliebige Form aufweisen. Dies natürlich immer unter Berücksichtigung der erfindungsgemäßen Voraussetzungen, dass zumindest zwei Ausgestaltungen von optischen Elementen vorhanden sind, die voneinander unterscheidbare Signale beziehungsweise Pulse mit unterschiedlichen Pulsweiten erzeugen.

## Patentansprüche

1. Personentransportanlage (1) die als Aufzug, Fahrtreppe oder Fahrsteig ausgebildet ist, mit einer Anordnung (30) aus Hilfselementen (31 - 34) und zumindest einer Erfassungseinrichtung (37), wobei die Anordnung (30) aus den Hilfselementen (31 - 34) entsprechend einer Bewegung zumindest eines Transportelements (5) der Personentransportanlage (1) um eine Drehachse (35) rotiert, wobei die Anordnung (30) aus den Hilfselementen (31 - 34) so ausgestaltet und die Erfassungseinrichtung (37) den Hilfselementen (31 - 34) so zugeordnet ist, dass alle Hilfselemente von derselben Erfassungseinrichtung (37) erfassbar und im gleichen Signalverlauf der Erfassungseinrichtung (37) erkennbar sind und von der Erfassungseinrichtung (37) erfassbar ist, ob sich an einer bestimmten Erfassungsstelle (38) gerade ein Hilfselement (31 - 34) befindet oder nicht, wobei mindestens ein Hilfselement (31 - 34) entsprechend einer ersten Ausgestaltungsart (41) und zumindest ein zweites Hilfselement (31 - 34) entsprechend einer zweiten Ausgestaltungsart (42) ausgestaltet sind, wobei von der Erfassungseinrichtung (37) zumindest bei einer Rotation der Anordnung (30) aus den Hilfselementen (31 - 34) erfassbar ist, ob ein sich an der Erfassungsstelle (38) befindendes Hilfselement (31 - 34) von der ersten Ausgestaltungsart (41) oder der zweiten Ausgestaltungsart (42) ist, und wobei von der Erfassungseinrichtung (3 7) bei der Rotation der Anordnung (30) aus den Hilfselementen (31 - 34) zumindest ein Hilfselement (31, 33) der ersten Ausgestaltungsart (41) und zumindest ein Hilfselement (32, 34) der zweiten Ausgestaltungsart (42) so einander zuordenbar sind, dass aus der definierten Erfassung von Hilfselementen (31, 32, 33, 34) der ersten Ausgestaltungsart (41) und der zweiten Ausgestaltungsart (42) die Drehrichtung (3A, 4A) der Anordnung (30) bestimmbar ist.

2. Personentransportanlage (1) nach Anspruch 1,
**dadurch gekennzeichnet,**
**dass** die Anordnung (30) aus den Hilfselementen (31 - 34) durch Anordnen der Hilfselemente (31 - 34) auf einem Schwungrad (10) des Antriebsmotors (9) oder auf einem von dem Antriebsmotor (9) oder durch eine Bewegung des Transportelements (5) zumindest mittelbar angetriebenen Rad (10) des Antriebsstranges gebildet ist.

3. Personentransportanlage (1) nach Anspruch 1 oder 2,
**dadurch gekennzeichnet,**
**dass** die Hilfselemente (31 - 34) als lichtdurchlässige optische Hilfselemente (31 - 34) und/oder als lichtreflektierende optische Hilfselemente (31 - 34) ausgebildet sind, oder dass die Erfassungseinrichtung (37) ausgestaltet ist, die Hilfselemente (31 - 34) induktiv zu erfassen, und/oder dass die Hilfselemente (31 - 34) als Vertiefungen und/oder Öffnungen und/oder aufgesetzte Metallplatten ausgestaltet sind.

4. Personentransportanlage (1) nach einem der Ansprüche 1 bis 3,
**dadurch gekennzeichnet,**
**dass** das zumindest eine Transportelement (5) als Aufzugskabine, Fahrtreppenstufe oder Fahrsteigsegment ausgebildet ist.

5. Personentransportanlage (1) nach einem der Ansprüche 1 bis 4,
**dadurch gekennzeichnet,**
**dass** die Anordnung (30) aus den Hilfselementen (31 - 34) so ausgestaltet ist, dass die Flächenschwerpunkte der optischen Hilfselemente (31 - 34) zumindest näherungsweise auf dem Radius (47) beziehungsweise der Umfangslinie (45) bezüglich der Drehachse (35) angeordnet sind, auf dem sich die Erfassungsstelle (38) befindet, und dass die Erfassungseinrichtung (37) so ausgestaltet ist, dass die Erfassung an der Erfassungsstelle (38) mit einer Auflösung in der Umfangsrichtung (46) erfolgt, die eine Zuordnung der Hilfselemente (31 - 34) zu der ersten Ausgestaltungsart (41) und der zweiten Ausgestaltungsart (42) ermöglicht.

6. Personentransportanlage (1) nach einem der Ansprüche 1 bis 5,
**dadurch gekennzeichnet,**
**dass** sich die Hilfselemente (31, 33) der ersten Ausgestaltungsart (41) und die Hilfselemente (32, 34) der zweiten Ausgestaltungsart (42) durch unterschiedliche Ausdehnungen (43A, 44A) in der Umfangsrichtung (46) auf dem Radius (47) beziehungsweise der Umfangslinie (45) bezüglich der Drehachse (35), auf dem sich die Erfassungsstelle (38) befindet, unterscheiden.

7. Personentransportanlage (1) nach einem der Ansprüche 1 bis 6,
**dadurch gekennzeichnet,**
**dass** die Hilfselemente (31 - 34) zumindest näherungsweise kreisförmig ausgestaltet sind und dass sich die Hilfselemente (31, 33) der ersten Ausgestaltungsart (41) und die Hilfselemente (32, 34) der zweiten Ausgestaltungsart (42) durch unterschiedliche Kreisradien (48, 49) ihrer kreisförmigen Ausgestaltungen unterscheiden
oder
**dass** die Hilfselemente (31 - 34) zumindest näherungsweise ellipsenförmig ausgestaltet sind und dass sich die Hilfselemente (31, 33) der ersten Ausgestaltungsart (41) und die Hilfselemente (32, 34) der zweiten Ausgestaltungsart (42) durch unterschiedliche Hauptbeziehungsweise Nebenachsen (50, 51), die in der Umfangsrichtung (46) orientiert sind, unterscheiden

8. Personentransportanlage (1) nach einem der Ansprüche 1 bis 6,
**dadurch gekennzeichnet,**
**dass** die Hilfselemente (31 - 34) einer Ausgestaltungsart zumindest ellipsenförmig und die der anderen Ausgestaltungsart (41, 42) zumindest näherungsweise kreisförmig ausgestaltet sind und dass die Haupt- oder Nebenachse (50, 51) der elliptischen Ausgestaltung der Hilfselemente (31 - 34) der einen Ausgestaltungsart, die in der Umfangsrichtung (46) orientiert ist, und ein Durchmesser (54) der Hilfselemente (31 - 34) der anderen Ausgestaltungsart (41, 42) unterschiedlich groß vorgegeben sind.

9. Personentransportanlage (1) nach einem der Ansprüche 1 bis 8,
**dadurch gekennzeichnet,**
**dass** die Erfassungseinrichtung (37) bei der Rotation der Anordnung (30) aus den Hilfselementen (31 - 34) ein erstes Hilfselement (31) der ersten Ausgestaltungsart (41) und ein zweites Hilfselement (32) der zweiten Ausgestaltungsart (42) basierend auf zeitlichen Abständen (D1, D2) zwischen den aufeinanderfolgenden Hilfselementen (31 - 34) einander zeitlich geordnet zuordnet, um die Drehrichtung (3A, 4A) der Anordnung (30) zu bestimmen.

10. Personentransportanlage (1) nach Anspruch 9,
**dadurch gekennzeichnet,**
**dass** die Erfassungseinrichtung (37) das erste Hilfselement (31) und das zweite Hilfselement (32) derart einander zeitlich geordnet zuordnet, dass das zweite Hilfselement (32) dem vorangegangenen ersten Hilfselement (31) zugeordnet wird, wenn der zeitliche Abstand (D1) zwischen diesem ersten Hilfselement (31) und diesem zweiten Hilfselement (32) kürzer ist als der zeitliche Abstand (D2) zwischen dem zweiten Hilfselement (32) und einem folgenden Hilfselement (33) der ersten Ausgestaltungsart (41), und dass das erste Hilfselement (31) dem vorangegangenen zweiten Hilfselement (32) zugeordnet wird, wenn der zeitliche Abstand (D1) zwischen diesem zweiten Hilfselement (32) und diesem ersten Hilfselement (31) kürzer ist als der zeitliche Abstand (D2) zwischen dem ersten Hilfselement (31) und einem folgenden Hilfselement (34) der zweiten Ausgestaltungsart (42).

11. Personentransportanlage (1) nach einem der Ansprüche 1 bis 10,
**dadurch gekennzeichnet,**
**dass** mehrere Hilfselemente (31, 33) der ersten Ausgestaltungsart (41) und mehrere Hilfselemente (32, 34) der zweiten Ausgestaltungsart (42) vorgesehen sind, die bezüglich ihrer Ausgestaltungsarten (41, 42) in der Umfangsrichtung (46) abwechselnd angeordnet sind.

12. Personentransportanlage (1) nach Anspruch 11,
**dadurch gekennzeichnet,**
**dass** die Anordnung (30) aus den Hilfselementen (31 - 34) axialsymmetrisch bezüglich der Drehachse (35) ausgestaltet ist.

13. Personentransportanlage (1) nach einem der Ansprüche 1 bis 12,
**dadurch gekennzeichnet,**
**dass** eine Verarbeitungseinrichtung (20') vorgesehen ist, die zum Berechnen von Informationen über einen Betriebszustand aus zeitlichen Abständen (D1) einander zugeordneten Hilfselementen (31, 32), die von der Erfassungseinrichtung (37) an der Erfassungsstelle (38) erfasst werden, und/oder aus zeitlichen Abständen (D2) zwischen einander nicht zugeordneten Hilfselementen (32, 33; 31, 34), die von der Erfassungseinrichtung (37) an der Erfassungsstelle (38) erfasst werden, dient, dass diese Informationen vorzugsweise einen Geschwindigkeitswert für das Transportelement (5) und/oder einen Beschleunigungswert für das Transportelement (5) und/oder eine Stillstandinformation bezüglich des Transportelements (5) umfassen und dass die Verarbeitungseinrichtung (20') diese Informationen vorzugsweise fortlaufend aktualisiert und/oder vorzugsweise zumindest zwei Informationen zur Kontrolle miteinander vergleicht.

14. Personentransportanlage (1) nach Anspruch 13,
**dadurch gekennzeichnet,**
**dass** eine Betriebsbremse (19) und eine Steuereinrichtung (20), die eine Ansteuerung der Betriebsbremse (19) ermöglicht, vorgesehen sind, und dass die Steuereinrichtung (20) in Abhängigkeit von den durch die Verarbeitungseinrichtung (20') bestimmten Informationen über den Betriebszustand die Betriebsbremse (19) für einen bestimmten Bremsvorgang so ansteuert, dass das Transportelement (5) in einer vorbestimmten Position anhält.

15. Verfahren zur Betriebszustandsbestimmung, insbesondere zur Geschwindigkeitsmessung und Laufrichtungserkennung beziehungsweise Drehrichtungserkennung, das für eine als Aufzug, Fahrtreppe oder Fahrsteig ausgebildete Personentransportanlage (1) dient und das mit einer Personentransportanlage (1) aufweisend eine Einrichtung (2), die eine Anordnung aus optischen Hilfselementen (31 - 34) und zumindest eine optische Erfassungseinrichtung (37) nach einem der Ansprüche 1 bis 13 aufweist, durchführbar ist, und wobei erfasst wird, ob sich an einer bestimmten Erfassungsstelle (38) gerade ein Hilfselement (31 - 34) befindet oder nicht, wobei erfasst wird, ob ein sich gerade an der bestimmten Erfassungsstelle (38) befindendes Hilfselement (31 - 34) von einer ersten Ausgestaltungsart (41) oder von einer zweiten Ausgestaltungsart (42) ist, wobei bei einer Rotation der Anordnung (30) aus den Hilfselementen (31 - 34) zumindest ein Hilfselement (31, 33) der ersten Ausgestaltungsart (41) und zumindest ein Hilfselement (32, 34) der zweiten Ausgestaltungsart (42) einander zugeordnet werden und wobei aus der Reihenfolge der Erfassung des Hilfselements (31) der ersten Ausgestaltungsart (41) und des Hilfselements (32) der zweiten Ausgestaltungsart (42), die einander zugeordnet sind, die Drehrichtung (3A, 4A) der Anordnung (30) bestimmt wird.

## Claims

1. Passenger transport system (1) which is designed as an elevator, escalator or moving walkway, comprising an arrangement (30) of auxiliary elements (31-34) and at least one detection device (37), wherein the arrangement (30) of the auxiliary elements (31-34) rotates about an axis of rotation (35) according to a movement of at least one transport element (5) of the passenger transport system (1), wherein the arrangement (30) of the auxiliary elements (31-34) is designed and the detection device (37) is associated with the auxiliary elements (31-34) such that all the auxiliary elements can be detected by the same detection device (37) and can be recognized in the same signal curve of the detection device (37) and the detection device (37) can detect whether or not an auxiliary element (31-34) is currently located at a particular detection point (38), wherein at least one auxiliary element (31-34) corresponds to a first embodiment type (41) and at least one second auxiliary element (31-34) corresponds to a second embodiment type (42), wherein the detection device (37) can detect, at least when the arrangement (30) of the auxiliary elements (31-34) rotates, whether an auxiliary element (31-34) located at the detection point (38) is of the first embodiment type (41) or the second embodiment type (42), and wherein, by means of the detection device (37), when the arrangement (30) of the auxiliary elements (31-34) is rotated, at least one auxiliary element (31, 33) of the first embodiment type (41) and at least one auxiliary element (32, 34) of the second embodiment type (42) can be associated with one another such that the direction of rotation (3A, 4A) of the arrangement (30) can be determined from the defined detection of auxiliary elements (31, 32, 33, 34) of the first embodiment type (41) and the second embodiment type (42).

2. Passenger transport system (1) according to claim 1, **characterized in that** the arrangement (30) of the auxiliary elements (31-34) is formed by arranging the auxiliary elements (31-34) on a flywheel (10) of the drive motor (9) or on a drivetrain wheel (10) driven at least indirectly by the drive motor (9) or a movement of the transport element (5).

3. Passenger transport system (1) according to either claim 1 or claim 2, **characterized in that** the auxiliary elements (31-34) are designed as translucent optical auxiliary elements (31-34) and/or as light-reflecting optical auxiliary elements (31-34), or **in that** the detection device (37) is designed to detect the auxiliary elements (31-34) inductively, and/or **in that** the auxiliary elements (31-34) are designed as depressions and/or openings and/or attached metal plates.

4. Passenger transport system (1) according to any of claims 1 to 3, **characterized in that** the at least one transport element (5) is designed as an elevator car, escalator step or moving walkway segment.

5. Passenger transport system (1) according to any of claims 1 to 4, **characterized in that** the arrangement (30) of the auxiliary elements (31-34) is designed such that the centers of gravity of the optical auxiliary elements (31-34) are arranged at least approximately on the radius (47) or the circumferential line (45) with respect to the axis of rotation (35), on which radius the detection point (38) is located, and **in that** the detection device (37) is designed such that the detection at the detection point (38) takes place at a resolution in the circumferential direction (46) which allows the auxiliary elements (31-34) to be associated with the first embodiment type (41) and the second embodiment type (42).

6. Passenger transport system (1) according to any of claims 1 to 5, **characterized in that** the auxiliary elements (31, 33) of the first embodiment type (41) and the auxiliary elements (32, 34) of the second embodiment type (42) are distinguished by different extensions (43A, 44A) in the circumferential direction (46) on the radius (47) or the circumferential line (45) with respect to the axis of rotation (35), on which radius the detection point (38) is located.

7. Passenger transport system (1) according to any of claims 1 to 6, **characterized in that** the auxiliary elements (31-34) are at least approximately circular and **in that** the auxiliary elements (31, 33) of the first embodiment type (41) and the auxiliary elements (32, 34) of the second embodiment type (42) are distinguished by different circular radii (48, 49) of their circular embodiments or **in that** the auxiliary elements (31-34) are at least approximately elliptical and **in that** the auxiliary elements (31, 33) of the first embodiment type (41) and the auxiliary elements (32, 34) of the second embodiment type (42) are distinguished by different main or secondary axes (50, 51) which are oriented in the circumferential direction (46).

8. Passenger transport system (1) according to any of claims 1 to 6, **characterized in that** the auxiliary elements (31-34) of one embodiment type are at least elliptical and those of the other embodiment type (41, 42) are at least approximately circular and **in that** the main or secondary axis (50, 51) of the elliptical embodiment of the auxiliary elements (31-34) of the one embodiment type, which axis is oriented in the circumferential direction (46), and a diameter (54) of the auxiliary elements (31-34) of the other embodiment type (41, 42) differ in size.

9. Passenger transport system (1) according to any of claims 1 to 8, **characterized in that**, when the arrangement (30) of the auxiliary elements (31-34) is rotated, the detection device (37) associates a first auxiliary element (31) of the first embodiment type (41) and a second auxiliary element (32) of the second embodiment type (42) with one another in chronological order on the basis of time intervals (D1, D2) between the successive auxiliary elements (31-34) in order to determine the direction of rotation (3A, 4A) of the arrangement (30).

10. Passenger transport system (1) according to claim 9, **characterized in that** the detection device (37) associates the first auxiliary element (31) and the second auxiliary element (32) with one another in chronological order such that the second auxiliary element (32) is associated with the preceding first auxiliary element (31) if the time interval (D1) between said first auxiliary element (31) and said second auxiliary element (32) is shorter than the time interval (D2) between the second auxiliary element (32) and a subsequent auxiliary element (33) of the first embodiment type (41), and **in that** the first auxiliary element (31) is associated with the preceding second auxiliary element (32) if the time interval (D1) between said second auxiliary element (32) and said first auxiliary element (31) is shorter than the time interval (D2) between the first auxiliary element (31) and a subsequent auxiliary element (34) of the second embodiment type (42).

11. Passenger transport system (1) according to any of claims 1 to 10, **characterized in that** a plurality of auxiliary elements (31, 33) of the first embodiment type (41) and a plurality of auxiliary elements (32, 34) of the second embodiment type (42) are provided which are arranged alternately in the circumferential direction (46) with regard to their embodiment types (41, 42).

12. Passenger transport system (1) according to claim 11, **characterized in that** the arrangement (30) of the auxiliary elements (31-34) is axially symmetric with respect to the axis of rotation (35).

13. Passenger transport system (1) according to any of claims 1 to 12, **characterized in that** a processing device (20') is provided which is used to calculate information regarding an operating state from time intervals (D1) of associated auxiliary elements (31, 32) which are detected by the detection device (37) at the detection point (38), and/or from time intervals (D2) between auxiliary elements (32, 33; 31, 34) which are not associated with one another and which are detected by the detection device (37) at the detection point (38), **in that** this information preferably includes a speed value for the transport element (5) and/or an acceleration value for the transport element (5) and/or a piece of standstill information relating to the transport element (5) and **in that** the processing device (20') updates this information preferably continuously and/or preferably compares at least two pieces of information for checking.

14. Passenger transport system (1) according to claim 13, **characterized in that** a service brake (19) and a control device (20) which allows actuation of the service brake (19) are provided, and **in that** the control device (20) actuates the service brake (19) for a specific braking operation on the basis of the information, determined by the processing device (20'), regarding the operating state in such a way that the transport element (5) stops in a predetermined position.

15. Method for determining an operating state, in particular for measuring speed and detecting the direction of travel or direction of rotation, which is used for a passenger transport system (1) designed as an elevator, escalator or moving walkway and which can be carried out using a passenger transport system (1) comprising a device (2) which has an arrangement of optical auxiliary elements (31-34) and at least one optical detection device (37) according to any of claims 1 to 13, wherein it is detected whether or not an auxiliary element (31-34) is currently located at a particular detection point (38), wherein it is detected whether an auxiliary element (31-34) currently located at the particular detection point (38) is of a first embodiment type (41) or of a second embodiment type (42), wherein, when the arrangement (30) of the auxiliary elements (31-34) is rotated, at least one auxiliary element (31, 33) of the first embodiment type (41) and at least one auxiliary element (32, 34) of the second embodiment type (42) are associated with one another, and wherein the direction of rotation (3A, 4A) of the arrangement (30) is determined from the order in which the auxiliary element (31) of the first embodiment type (41) and the auxiliary element (32) of the second type embodiment type (42), which are associated with one another, are detected.

## Revendications

1. Installation de transport de personnes (1) réalisée sous la forme d'un ascenseur, d'un escalator ou d'un tapis roulant, comportant un système (30) constitué d'éléments auxiliaires (31 - 34) et au moins un dispositif de détection (37), dans laquelle le système (30) constitué des éléments auxiliaires (31 - 34) tourne autour d'un axe de rotation (35) en fonction d'un mouvement d'au moins un élément de transport (5) de l'installation de transport de personnes (1), dans laquelle le système (30) constitué des éléments auxiliaires (31 - 34) est configuré de telle manière, et le dispositif de détection (37) est associé aux éléments auxiliaires (31 - 34) de telle manière que tous les éléments auxiliaires peuvent être détectés par le même dispositif de détection (37) et peuvent être détectés dans le même profil de signal du dispositif de détection (37) et le dispositif de détection (37) peut détecter si un élément auxiliaire (31 - 34) se trouve ou non précisément au niveau d'un point de détection déterminé (38), dans lequel au moins un élément auxiliaire (31 - 34) est configuré selon un premier type de configuration (41) et au moins un second élément auxiliaire (31-34) est configuré selon un second type de configuration (42), dans lequel le dispositif de détection (37) peut détecter, au moins lors d'une rotation du système (30) constitué des éléments auxiliaires (31-34), si un élément auxiliaire (31-34) se trouvant au niveau du point de détection (38) est du premier type de configuration (41) ou du second type de configuration (42), dans lequel le dispositif de détection (37) peut détecter, lors de la rotation du système (30) constitué des éléments auxiliaires (31 - 34) peut associer l'un à l'autre au moins un élément auxiliaire (31, 33) du premier type de configuration (41) et au moins un élément auxiliaire (32, 34) du second type de configuration (42) de telle manière que le sens de rotation (3A, 4A) du système (30) puisse être déterminé à partir de la détection définie d'éléments auxiliaires (31, 32, 33, 34) du premier type de configuration (41) et du second type de configuration (42).

2. Installation de transport de personnes (1) selon la revendication 1, **caractérisée en ce que** le système (30) constitué des éléments auxiliaires (31 - 34) est formé par le système des éléments auxiliaires (31 - 34) sur un volant d'inertie (10) du moteur d'entraînement (9) ou sur une roue (10) du groupe motopropulseur entraînée au moins indirectement par le moteur d'entraînement (9) ou par un mouvement de l'élément de transport (5).

3. Installation de transport de personnes (1) selon la revendication 1 ou 2, **caractérisée en ce que** les éléments auxiliaires (31 - 34) sont réalisés sous forme d'éléments auxiliaires (31 - 34) optiques transmettant de la lumière et/ou sous forme d'éléments auxiliaires (31 - 34) optiques réfléchissant de la lumière, ou **en ce que** le dispositif de détection (37) est conçu pour détecter les éléments auxiliaires (31 - 34) par induction, et/ou **en ce que** les éléments auxiliaires (31 - 34) sont réalisés sous forme d'évidements et/ou d'ouvertures et/ou de plaques métalliques montées.

4. Installation de transport de personnes (1) selon l'une des revendications 1 à 3, **caractérisée en ce que** l'au moins un élément de transport (5) est réalisé sous la forme d'une cabine d'ascenseur, d'une marche d'escalier roulant ou d'un segment de tapis roulant.

5. Installation de transport de personnes (1) selon l'une des revendications 1 à 4, **caractérisée en ce que** l'ensemble (30) constitué des éléments auxiliaires (31 - 34) est conçue de telle manière que les centres de gravité superficiels des éléments auxiliaires (31 - 34) optiques sont disposés au moins approximativement sur le rayon (47) ou la ligne circonférentielle (45) par rapport à l'axe de rotation (35), sur lequel se trouve le point de détection (38), et **en ce que** le dispositif de détection (37) est configuré de telle manière que la détection au niveau du point de détection (38) s'effectue avec une résolution dans la direction circonférentielle (46) qui permet d'associer les éléments auxiliaires (31 - 34) au premier type de configuration (41) et au second type de configuration (42).

6. Installation de transport de personnes (1) selon l'une des revendications 1 à 5, **caractérisée en ce que** les éléments auxiliaires (31, 33) du premier type de configuration (41) et les éléments auxiliaires (32, 34) du second type de configuration (42) diffèrent par des extensions différentes (43A, 44A) dans la direction circonférentielle (46) sur le rayon (47) ou sur la ligne circonférentielle (45) par rapport à l'axe de rotation (35) sur lequel le point de détection (38) se trouve.

7. Installation de transport de personnes (1) selon l'une des revendications 1 à 6, **caractérisée en ce que** les éléments auxiliaires (31 - 34) sont au moins approximativement de forme circulaire et **en ce que** les éléments auxiliaires (31, 33) du premier type de configuration (41) et les éléments auxiliaires (32, 34) du second type de configuration (42) diffèrent par des rayons de cercle (48, 49) de leurs configurations circulaires ou **en ce que** les éléments auxiliaires (31 - 34) sont au moins approximativement de forme elliptique et **en ce que** les éléments auxiliaires (31, 33) du premier type de configuration (41) et les éléments auxiliaires (32, 34) du second type configuration (42) diffèrent par des axes principaux ou secondaires (50, 51) différents orientés dans la direction circonférentielle (46).

8. Installation de transport de personnes (1) selon l'une des revendications 1 à 6, **caractérisée en ce que** les éléments auxiliaires (31 - 34) d'un type de configuration sont au moins elliptiques et ceux de l'autre type de configuration (41, 42) sont au moins approximativement circulaires et **en ce que** l'axe principal ou secondaire (50, 51) de la configuration elliptique des éléments auxiliaires (31-34) d'un type de configuration, qui est orienté dans la direction circonférentielle (46), et un diamètre (54) des éléments auxiliaires (31-34) de l'autre type de configuration (41, 42) sont réglés pour être de taille différente.

9. Installation de transport de personnes (1) selon l'une des revendications 1 à 8, **caractérisée en ce que** le dispositif de détection (37), lors de la rotation du système (30) constitué des éléments auxiliaires (31 - 34), détecte un premier élément auxiliaire (31) du premier type de configuration (41) et un second élément auxiliaire (32) du second type de configuration (42) sur la base d'intervalles de temps (D1, D2) entre les éléments auxiliaires (31 - 34) successifs sont disposés dans le temps afin de déterminer le sens de rotation (3A, 4A) du système (30).

10. Système de transport de personnes (1) selon la revendication 9, **caractérisé en ce que** le dispositif de détection (37) associe le premier élément auxiliaire (31) et le second élément auxiliaire (32) l'un à l'autre dans l'ordre successif de telle manière que le second élément auxiliaire (32) soit associé au premier élément auxiliaire (31) précédent lorsque l'intervalle de temps (D1) entre ledit premier élément auxiliaire (31) et ledit second élément auxiliaire (32) est plus court que l'intervalle de temps (D2) entre le second élément auxiliaire (32) et un élément auxiliaire (33) suivant du premier type de configuration (41), et **en ce que** le premier élément auxiliaire (31) est associé au second élément auxiliaire (32) précédent lorsque l'intervalle de temps (D1) entre ledit second élément auxiliaire (32) et ledit premier élément auxiliaire (31) est plus court que l'intervalle de temps (D2) entre le premier élément auxiliaire (31) et un élément auxiliaire (34) suivant du second type de configuration (42).

11. Installation de transport de personnes (1) selon l'une des revendications 1 à 10, **caractérisée en ce qu'**une pluralité d'éléments auxiliaires (31, 33) du premier type de configuration (41) et une pluralité d'éléments auxiliaires (32, 34) du second type de configuration (42) sont prévus, lesquels éléments auxiliaires sont disposés alternativement dans la direction circonférentielle (46) par rapport à leurs types de configuration (41, 42).

12. Installation de transport de personnes (1) selon la revendication 11, **caractérisée en ce que** l'ensemble (30) constitué des éléments auxiliaires (31 - 34) est axialement symétrique par rapport à l'axe de rotation (35).

13. Installation de transport de personnes (1) selon l'une des revendications 1 à 12, **caractérisée en ce qu'**un dispositif de traitement (20') est prévu, lequel dispositif de traitement sert à calculer des informations sur un état de fonctionnement à partir d'intervalles de temps (D1) d'éléments auxiliaires (31, 32) associés les uns aux autres, qui sont détectés par le dispositif de détection (37) au niveau du point de détection (38), et/ou à partir d'intervalles de temps (D2) entre des éléments auxiliaires (32, 33 ; 31, 34) non associés les uns aux autres, qui sont détectées par le dispositif de détection (37) au niveau du point de détection (38), **en ce que** lesdites informations comprennent de préférence une valeur de vitesse pour l'élément de transport (5) et/ou une valeur d'accélération pour l'élément de transport (5) et/ou des informations d'arrêt concernant l'élément de transport (5) et **en ce que** le dispositif de traitement (20') actualise, de préférence, ces informations en permanence et/ou compare, de préférence, au moins deux informations entre elles à des fins de contrôle.

14. Installation de transport de personnes (1) selon la revendication 13, **caractérisée en ce qu'**un frein de service (19) et un dispositif de commande (20) sont prévus, lequel dispositif de commande permet d'actionner le frein de service (19), et **en ce que** le dispositif de commande (20) commande le frein de service (19) pour une opération de freinage déterminée en fonction des informations sur l'état de fonctionnement déterminées par le dispositif de traitement (20'), de sorte que l'élément de transport (5) s'arrête dans une position prédéterminée.

15. Procédé de détermination de l'état de fonctionnement, en particulier de mesure de la vitesse et de détection du sens de marche ou de détection du sens de rotation, qui est utilisé pour une installation de transport de personnes (1) réalisée sous la forme d'un ascenseur, d'un escalator ou d'un tapis roulant, et qui peut être réalisé à l'aide d'une installation de transport de personnes (1) comportant un dispositif (2) doté d'un système constitué d'éléments auxiliaires (31 - 34) optiques et au moins un dispositif de détection (37) optique selon l'une des revendications 1 à 13, et dans lequel on détecte si un élément auxiliaire (31 - 34) se trouve ou non précisément au niveau d'un point de détection déterminé (38), dans lequel on détecte si un élément auxiliaire (31 - 34) se trouvant précisément au niveau du point de détection déterminé (38) est d'un premier type de configuration (41) ou d'un second type de configuration (42), dans lequel, lors d'une rotation du système (30) constitué des éléments auxiliaires (31 - 34), au moins un élément auxiliaire (31, 33) du premier type de configuration (41) et au moins un élément auxiliaire (32, 34) du second type de configuration (42) sont associés l'un à l'autre, et dans lequel le sens de rotation (3A, 4A) du système (30) est déterminé à partir de l'ordre de succession de la détection de l'élément auxiliaire (31) du premier type de configuration (41) et de l'élément auxiliaire (32) du second type de configuration (42) qui sont associés l'un à l'autre.
